# EUROPÄISCHE PATENTSCHRIFT

(11) **EP 1 154 370 B1**
(45) Veröffentlichungstag und Bekanntmachung des Hinweises auf die Patenterteilung: **23.01.2008**
(21) Anmeldenummer: 01107532.2
(22) Anmeldetag: 26.03.2001
(51) Int. Cl.: G06K 9/00, G01N 15/14, G03F 3/10, H04N 1/54, A01G 7/00

(54) **Automatische Bonitierung von biologischen Objekten auf der Basis dynamischer Farbanalyse mit nachfolgender Grössen- und Formanalyse**
Automatic labelling of biological objects on the basis of dynamic colour analysis with subsequent size and shape analysis
Etiquetage automatique d'objets biologiques sur la base d'une analyse dynamique de couleurs avec analyse de taille et de forme subséquentes

(30) Priorität: 24.03.2000 DE 10014345
(43) Veröffentlichungstag der Anmeldung: 14.11.2001
(73) Patentinhaber: LemnaTec GmbH, 52146 Würselen (DE)
(72) Erfinder: Vandenhirtz, Dirk, 52064 Aachen (DE); Eberius, Matthias, 52146 Würselen (DE)
(74) Vertreter: Castell, Klaus

(56) Entgegenhaltungen:
- WO-A-97/20198
- WO-A-98/44333
- WO-A-99/63057
- US-A- 3 819 913
- US-A- 3 999 047
- US-A- 5 841 883

## Beschreibung

Die Erfindung betrifft ein Verfahren zur automatischen Bonitierung von Grünpflanzen anhand einer aus einer Anzahl von Pixeln bestehenden digitalen Aufnahme des Objektes durch Einteilung der Pixel in vordefinierbare Klassen.

Die Erfindung betrifft also die automatische Bildverarbeitung, insbesondere die Segmentierung eines digitalen Bildes. Dabei wird im allgemeinen unter einer Segmentierung eine Klassifizierung und eine Identifizierung verstanden: jedem Pixel des digitalen Bildes ist ein ein-oder mehrdimensionaler Vektor zugeordnet, dessen Komponenten diskrete Werte eines vorgegebenen Wertebereiches annehmen können und je nach Bild unterschiedlichste Daten repräsentieren. Im Falle eines im Zusammenhang mit der hier vorliegen Anmeldung üblicherweise zu untersuchenden Farbbildes ist jedem Pixel des Bildes ein wenigstens dreidimensionaler Vektor zugeordnet, dessen wenigstens drei Komponenten die Anteile der zur Darstellung des Bildes z.B. auf einem Bildschirm verwendeten Grundfarben repräsentieren, üblicherweise also den Rot-, den Grün- und den Blauanteil des jeweiligen Pixels. Alle Pixel liegen im sogenannten Ortsraum, bilden also bei einer zweidimensionalen Darstellung das aufgenommene Objekt hinsichtlich seiner Topographie (nicht notwendigerweise hinsichtlich des Farbeindruckes) so ab, wie es auch einem menschlichen Betrachter erscheint.

Bei der Segmentierung des digitalen Bildes muss nun je nach Aufgabenstellung ein geeigneter Merkmalsraum definiert werden, innerhalb dem in besonders einfacher Weise Äquivalenzklassen gebildet werden können, in die die Pixel des zu segmentierenden Bildes eingeordnet werden. Um zu einer für den Menschen sinnvollen Aussage bzw. Darstellung der Ergebnisse zu gelangen, müssen die Elemente einer Äquivalenzklasse aus dem Merkmals- in den Ortsraum rücktransformiert werden, so dass also für den Betrachter des segmentierten Bildes klar ist, welche Gebiete des Bildes in der wie auch immer definierten Art und Weise zusammengehören.

Automatische Segmentierungsverfahren für verschiedene Anwendungen sind seit langem in einer Unzahl von Ausführungsformen bekannt. Hierzu wird auf die WO 98/44333 A, die US 3,819,913 A und die US 3,999,047 A verwiesen. Trotzdem können sie menschliche "Segmentierer" nicht in allen Bereichen ersetzen, was unter anderem daran liegt, dass das Wissen, mit dem ein menschlicher Experte ein Bild segmentiert nicht völlig verstanden und daher nicht ohne weiteres in einem automatischen Verfahren zu implementieren ist. Insbesondere konnte bislang bei der sogenannten Bonitierung biologischer Objekte, z.B. der Untersuchung von Blättern von Grünpflanzen auf Befallstellen und die Beurteilung der Befallstellen hinsichtlich ihrer Anzahl, Größen, Verteilung und des Ausmaßes an Schädigung nicht auf menschliches Expertenwissen verzichtet werden.

Das Dokument WO99/63057 beschreibt die Klassifizierung der Pflanzenembryo-Qualität mittels automatischer digitaler Bildanalyse. Dabei werden pixelweise die Rot-, Grün- und Blauwerte detektiert und klassifiziert, wobei in einer Ausführungsform eine logarithmische Darstellung des dreidimensionalen Farbraums verwendet wird.

Davon ausgehend liegt der Erfindung die Aufgabe zugrunde, ein Verfahren zur Bonitierung von Grünpflanzen anzugeben, dessen Ergebnisse den Ergebnissen einer menschlichen Bonitierung möglichst nahe kommen.

Die Aufgabe wird gelöst von einem Verfahren gemäß Anspruch 1.

Dabei entspricht in der Terminologie der klassischen Bildverarbeitung der zweidimensionale Farbraum dem Merkmalsraum, in dem dann Äquivalenzklassen gebildet werden.

Die Besonderheit des erfindungsgemäßen Verfahrens basiert nun auf der überraschenden Erkenntnis, dass - jedenfalls zur Bonitierung der hier in Frage stehenden Objekte - in dem Merkmalsraum Äquivalenzklassen in besonders einfacher und dem menschlichen Vorgehen sehr nahekommender Weise dadurch gebildet werden können, dass zunächst die Lage der Pixel eines Referenzobjektes, also z.B. eines gesunden Blattes, in dem Merkmalsraum bestimmt wird und dass sodann der Merkmalsraum durch Legen einer Tangente an ein Bezugsgebiet, im folgenden "Grünberg" genannt, derart unterteilt werden kann, dass die Lage der untersuchten Pixel nach der Transformation in den Merkmalsraum relativ zu der Tangente oder weiteren geometrischen Konstrukten eine klassifizierung der Pixel ermöglicht.

Dabei entspricht in der Terminologie der klassischen Bildverarbeitung der zweidimensionale Farbraum dem Merkmalsraum, in dem dann Äquivalenzklassen gebildet werden.

Das Bezugsgebiet (Grünberg) kann parametrisch definiert werden und/oder Bewertungsklassen werden vorab aus Kalibrationsbildern direkt über bildeigene Ankerfarben synthetisiert und als Bezugsgebiete verwendet. Die Rücktransformation aus dem Merkmals- in den Ortsraum, also die Identifizierung der Pixel kann dann auf unterschiedlichste, an sich bekannte Arten und Weisen erfolgen, worauf im weiteren noch eingegangen wird.

Insbesondere bei der Bonitierung von Pflanzen hat es sich gezeigt, dass als Merkmalsraum vorteilhaft der aus den Rot- und Grünanteilen bei der aditiven Farbmischung mit den Grundfarben Rot, Grün und Blau bestehende Farbraum verwendet werden kann. Zur Verfolgung der Verfahrensschritte auf einem Bildschirm und zum intuitiven Verständnis des Verfahrens hat es sich als zweckmäßig erwiesen, wenn dabei die Anteile von Rot und Grün logarithmisch aufgetragen werden, Abszisse und Ordinate des verwendeten Koordinatensystem also logarithmische Skalen tragen.

Bei einer bevorzugten Durchführungsform des Verfahrens wird als zweites Auswahlkriterium eine Nachbarschaftsbeziehung zwischen solchen Elementen des zweidimensionalen Farbraumes gewählt, die ein Bezugsgebiet einschließen, in dem sich ein bestimmter Prozentsatz, z.B. 95 % zu einer vordefinierten Klasse gehörender Pixel eines Referenzobjektes befinden. So kann der erwähnte Grünberg 95% beispielsweise so definiert sein, dass 95% aller grünen Blattpixel eines gesundes Blattes innerhalb der Umrisslinie des Berges liegen.

Bestimmte Aufnahmeparameter und insbesondere Daten der aufgenommenen Objekte, z.B. deren Alter, die mit einer Veränderung der Färbung des Objektes einhergehen, können bei der Bildung von Äquivalenzklassen im Merkmalsraum leicht durch die Einführung eines "Offsets" berücksichtigt werden. Dazu wird einfach das Bezugsgebiet in bestimmter Weise verschoben.

Weitere Einzelheiten und Vorteile der Erfindung ergeben sich aus der nachfolgenden einiger Durchführungs- und Anwendungsbeispiele erfindungsgemäßer Verfahren in Verbindung mit der Zeichnung, in welcher:
Fig. 1 eine schematische Darstellung der Erstellung einer (digitalen) Aufnahme eines zu bonitierenden Objektes zeigt,
Fig. 2 verschiedene Bilder aus dem Bonitierungsprozess mittels eines erfindungsgemäßen Verfahrens zeigt,
Fig. 3 ein Schema des Entscheidungsablaufes zur Auffindung sogenannter Übersegmentierungen zeigt,
Fig. 4 Zwischenstufen bei der automatischen Bonitierung zeigen,
Fig. 5 einen Merkmalsraum zur Bonitierung von Grünpflanzen zeigt, auf dessen Abszisse der Logarithmus des Grünanteils und auf dessen Ordinate der Logarithmus des Rotanteils aufgetragen ist,
Fig. 6 ein Beispiel einer mittels des erfindungsgemäßen Verfahrens erzeugten Tabelle wiedergibt, in welcher unterschiedliche automatisch erstellte Ergebnisse eines Bonitierungsprozesses zusammengefasst sind und
Fig. 7 ein Diagramm zeigt, in welchem Ergebnisse eine Bonitierung grafisch aufgetragen sind.

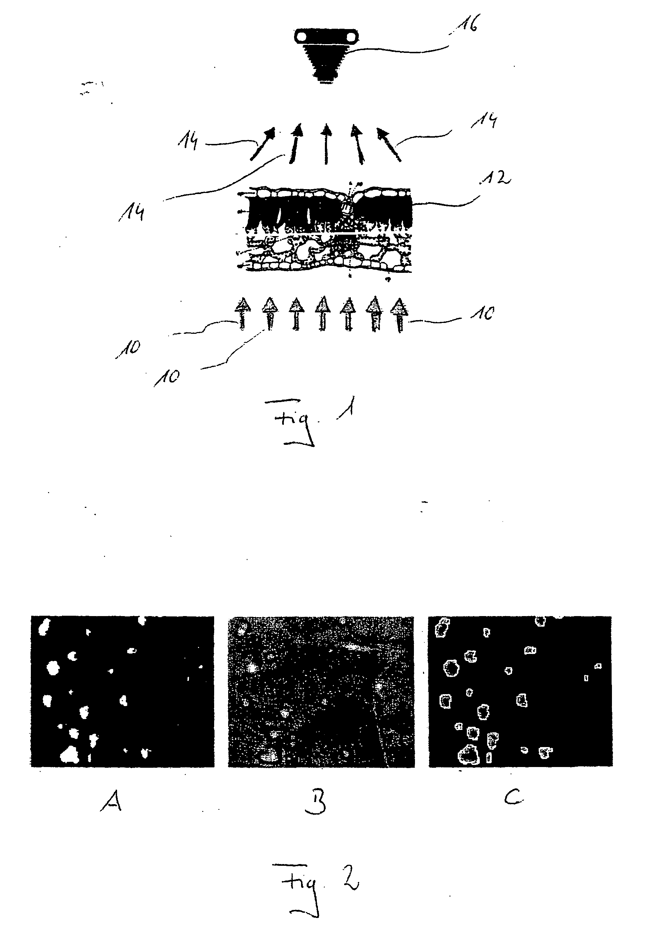

In der Fig. 1 wir schematisch gezeigt, wie eine Aufnahme eines zu untersuchenden Objektes, die Grundlage für das automatische Verfahren zur Bonitierung bilden kann, erstellt werden kann: von einer hier nicht weiter gezeigten Lichtquelle werden Lichtstrahlen 10, von denen aus Gründen der Übersichtlichkeit nur einige mit Bezugszeichen versehen wurden, von unten auf ein Untersuchungsobjekt 12, im dargestellten Beispiel ein Pflanzenblatt eingestrahlt.

Die transmittierten Lichtstrahlen, dargestellt durch die Pfeile 14, von denen wiederum nur einige mit Bezugszeichen versehen wurde, werden mittels einer Kamera 16 aufgenommen, bei der es sich vorzugsweise direkt um eine Digitalkamera mit einer Anzahl von CCD-Zellen handeln kann.

Zur Erzeugung eines farbigen Bildes wird weißes Licht 10 eingestrahlt, aus dem in der Pflanze bestimmte Farbanteile, bei einer gesunden Grünpflanze hauptsächlich Lichtstrahlen mit Wellenlängen im roten und blauen Spektralbereich, herausgefiltert werden, so dass vorrangig grüne Lichtstrahlen das Blatt durchdringen, wodurch der grüne Farbeindruck entsteht.

Grundsätzlich ist es natürlich auch möglich, mit analogen Kameras aufgenommene Farbbilder zu digitalisieren. Im Interesse einer möglichst verlustfreien Analyse wird jedoch im Regelfall direkt ein digitales Bild des zu untersuchenden Objektes aufgenommen.

Um die grundsätzliche Arbeitsweise des erfindungsgemäßen Verfahrens zu verdeutlichen, wird im nachfolgenden davon ausgegangen, dass es sich bei dem zu untersuchenden Objekt 12 um ein Tabakblatt handelt, bei dem in der automatischen Bonitierung Befallstellen gefunden, gezählt und nach Größe ausgewertet werden sollen. Dabei soll unterschieden werden zwischen einzelnen auf dem Blatt liegenden Befallstellen, die sich wahrscheinlich frei und ungehindert ausbreiten konnten, und Befallstellen, die in Clustern oder an Blatträndern und Blattrissen liegen und wahrscheinlich keine freie Wachstumsmöglichkeit hatten.

Die Gruppe der freien Befallstellen soll parallel zur Gesamtheit aller Befallstellen-in einem eigenen Größendatensatz gesammelt werden. Weiter sollen die gefundenen Befallstellen visualisiert werden, was für die digitale Auswertung zwar keinerlei Relevanz hat, es aber dem Benutzer erlaubt, die Konformität der automatischen Bonitierung mit den von einem menschlichen Experten durchgeführten Bonitierung zur überprüfen und das Verfahren und dessen Ergebnisse intuitiv zu verstehen.

Bei der Aufnahme ist die Kalibaration der Aufnahmeeinheit ein sehr wichtiger Punkt, um reproduzierbare Auswertung insbesondere für Aufnahmen mit verschiedenen Blenden zu erreichen. Die hier beispielhaft behandelten Tabakblätter besitzen optische Dichten von bis über 2,5, d.h. Transparenzwerte von 10-2,5, was bedeutet, dass weniger als 1 % des Lichtes sie passieren kann. Bei einer üblichen Auflösung von 8 Bit hätte das Ergebnis weniger als ein LSB (least significant bit, kleinste Schrittgröße), wenn der hellste ungefilterte Punkt (der sogenannte Weißpunkt) gerade im Anschlag der Kanäle, also z.B. bei [255, 255, 255], läge.

Um eine gut belichtete Aufnahme des Bildes zu erzielen, schlägt die Erfindung daher vor, durch Wahl einer geeigneten Kombination von Blende und Belichtungszeitpunkt den Weißpunkt soweit aus dem Wertebereich hinauszuschieben, dass er, auf die Maximalwerte projiziert, nicht mehr direkt den Messwerten zu entnehmen ist. Die Kalibration kann vor oder noch während der diskretisierenden A/D-Wandlung stattfinden.

Die üblicherweise eingesetzten CCD-Farbkameras sind in den bislang kommerziell sinnvoll einsetzbaren Ausstattungsklassen nicht absolut kalivierbar. Für die quantitative Farb-Bildanalyse ist es jedoch notwendig, Farben möglichst reproduzierbar darzustellen und den ohnehin begrenzten Kontrastumfang der Kameras voll auszunutzen.

Da eine Farbkalibration über Farbkarten und Software eine ganze Reihe von Nachteilen hat, wie z.B. den für die Kalibration jedes Einzelbildes sehr hohen Rechenzeitaufwand, wird hier vorgeschlagen, die Kalibration vor die Bildaufnahme zu legen (externe Kalibration) und nur auf einen Gradienten zu beziehen. Damit lassen sich dann der Ursprung (Schwarzpunkt) und die Unbuntachse bestimmen. Weicht diese vom Idealwert ab, kann dies durch Veränderungen an der zur Übernahme des von der CCD-Kamera erzeugten Bildes verwendeten Hard- und Software leicht kompensiert werden. Die Farbtransformation erfolgt also analog vor der Datendigitalisierung. Durch die Festlegung des Schwarzpunktes auf den Ursprung wird der Kontrastumfang der Kamera maximiert.

Liegen Bilder aus nicht-vorkalibrierbaren Quellen vor (z.B. Digitalkameras für Freilandarbeiten), so lassen sich solche Bilder mit der gleichen Methode, allerdings unter Verlust von Kontrastumfang, noch kalibrieren.

Da es keine absolute Farbkalibrierung gibt, die objektiv Farben festlegen und zuordnen kann, muss eine Klassifizierung immer an einem vom Mensch vorgegebenen Klassifizierungsmaßstab kalibriert werden. Sollen Farben aus realen Bildern, z.B. biologisch aussagekräftigen Bewertungsklassen wie "gesund", "chlorotisch", "nekrotisch", "gebleicht" zugeordnet werden, gibt es eine Reihe von Verfahrensweisen, um die Farbklassen gegeneinander abzutrennen.

In einem Farbsystem wird jede Farbe durch drei Parameter gekennzeichnet. Zur empirischen Zuordnung werden bei der Kalibration Ankerfarben ausgewählt und als Repräsentanten von Bewertungsklassen zu Farbklassen zusammengefügt. Die Zuordnung aller im Bild vorkommenden Farben erfolgt dann über die kürzesten geometrischen Abstände zu den Ankerfarben im gewählten Farbraum. Bei dieser Vorgehensweise könne ohne Modellvorgaben beliebige Anteile des Farbraumes zu einer Farbklasse zusammengefasst werden.

Besonders bewährt hat es sich, wenn die Auswahl der Ankerfarben direkt aus dem Bild erfolgt. Einzelne Bildpunkte werden bei der Kalibration visuell aus dem Bild entnommen, vergrößert dargestellt und können dann in eine vorgegebene Farbklasse übernommen werden. Die so entstehende Farbklassifizierung kann durch den Einsatz mehrerer Bilder komplettiert werden. Das Verfahren ist hoch flexibel und erlaubt dem Anwender eine Kalibration nach seinen Wertsetzungen, ist also genau im Sinne einer Bonitierung. Gleichzeitig ist das Verfahren durch den intuitiven Charakter sehr benutzerfreundlich. Widersprüche in der Klassifizierung zeigen sich in der Falschfarbendarstellung meist durch ringförmige Artefakte bei Farbverläufen.

Um nun das verwendete Farbsystem vom Rechenaufwand her handhabbar zu machen, wird der Farbraum auf einen Farbraum mit zwei Dimensionen projiziert. Für den Einsatzbereich pflanzlicher Biotests wird vorzugsweise eine Rot-Grün-Projektion verwendet. Die Eliminierung des Blauanteils vor der Farbbewertung und Klassifikation erlaubt auch die Entfernung von Reflektionen auf großen Blättern im Anflichthetrieb. Die blauen Farbanteile tragen nicht zur biologisch relevanten Information bei.

Die Darstellung z.B. der Rot-Grün-Verhältnisse im Rot-Grün-Koordinatensystem erlaubt eine Flächenaufteilung als Basis für die Klassifizierung, welche durch einfache geometrische Formen handhabbar ist. Besonders gut lassen sich hier die für das menschliche Auge sonst extrem schwer handhabbaren Übergänge grün, braun, gelb zuordnen, was für Biotests extrem wichtig ist.

Für den Gesundheitszustand einer Blattfläche ist neben der Farbe auch die Intensität der Farbe wichtig. Gleichzeitig sind jedoch z.B. jüngere Blätter auf Grund ihrer geringeren Dicke und Chlorophyllentwicklung heller als ältere Blätter, grundsätzlich aber gesünder als ältere Blätter mit einem Anteil heller grüner Bereiche, die auf flächige Schadbereiche zurückzuführen sind.

Zur Festlegung einer reproduzierbaren Klassifizierung wird daher das Verfahren mit einigen, z.B. zwei bis fünf, ausgewachsenen gesunden und jungen Blättern kalibriert. Aus dem Häufigkeitshistogramm entwickelt das System automatisch einen Bereich in der Rot-Grün-Projektion, in dem 95% aller Blattpixel liegen.

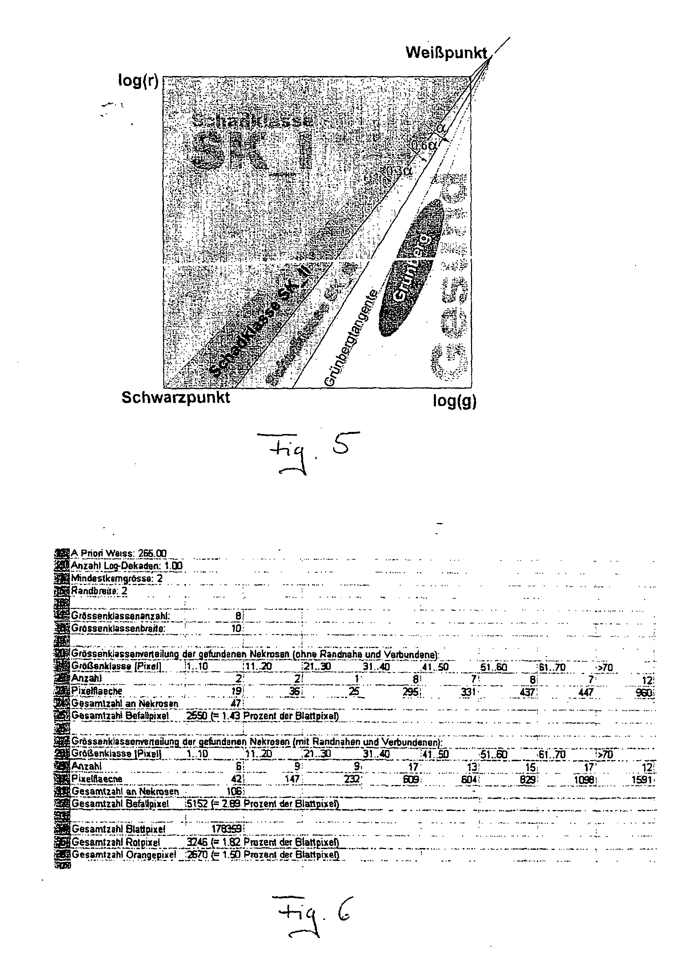

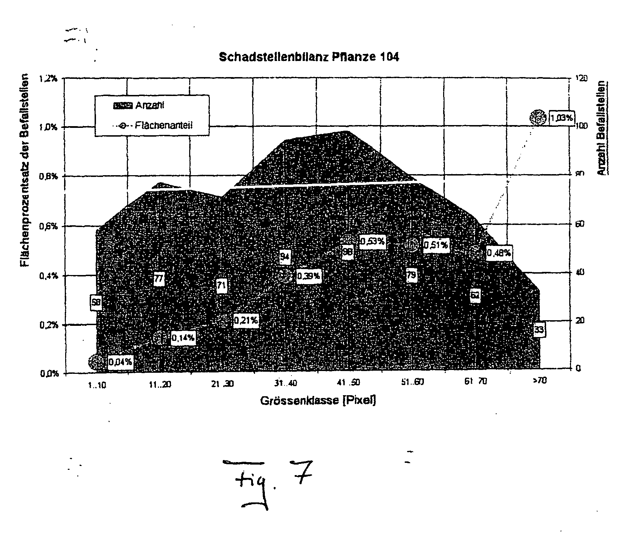

Auf dem histogramm-topografischen Scatterplot der Tabakpflanze in doppelt-logarhitmischer Darstellung zeigt sich, dass die Grüntöne die Verteilung eines langgestreckten Berges besitzen. Daher der Name "Grünberg". Die Höhenlinien dieses Berges zeigen - wie in Fig. 5 angedeutet - die Form von Ellipsen. Über an sich bekannte morphologische Operationen auf einer der Höhenschnittmasken lässt sich eine pragmatische Grenzlinie um den Grünberg festlegen. Innerhalb dieser Grenze können aus den Werten des Histogramms ein Flächenschwerpunkt als Erwartungswert und die Momente der Verteilung gewonnen werden. Dadurch ist sowohl das Zentrum als auch die Orientierung von langer Haupt- und kurzer Nebenachse der Ellipse bestimmt. Schwerpunkt und Hauptachse legen den wahrscheinlichsten zugrunde liegenden Weißpunktstrahl der Grünfärbung fest. Diese kann, muss aber nicht mit der Färbung reinen Chlorophylls übereinstimmen.

Definitionsgemäß ist der Weißpunkt der Punkt völliger Verdünnung jeder Farbe. In ihm treffen sich alle Farbstrahlen. Er kann daher aus dem Weißpunktstrahl der Grüntöne, und der Unbuntachse als Farbortgerade eines (angenommenen) schwarzen/grauen Farbstoffs (Anteile der Farben R und G bei der zweidimensionalen Darstellung sind gleich) als Schnittpunkt geschätzt werden.

Mit dem Weißpunkt kann die Farbkarte im Sinne unterschiedlicher zugrundeliegender Filterfarben aufgeteilt werden. Insbesondere hat es sich gezeigt, dass als Parameter zur Messung der Schadhaftigkeit bzw. Gesundheit einer in der Farbkarte eingetragenen Farbe die Lage der Farbe relativ zu der Tangente an den Grünberg und ggf. weiteren Geraden durch den Weißpunkt geeignet ist. Wie in Fig. 5 dargestellt, sind neben der Grünbergtangente und der in der Figur nicht weiter bezeichneten Unbuntachse zwei weitere Geraden durch den Weißpunkt gelegt, die eigene Klassen, hier die Schadklassen Sk_II und Sk_III definieren, während alle Farben überhalb der Unbuntachse einer eigenen Klasse, nämlich der Schadklasse SK_I zugeordnet werden.

Bei diesem Ausführungsbeispiel sind also drei Schadklassen neben einer Gesundklasse eingerichtet, deren Grenzen praktischen Beobachtungen entspringen und die vom Benutzer verändert werden können. In der Schadklasse SK_I liegen alle Farben mit höchster Verlässlichkeit der Schädigung. Befallstellen gewöhnlicher Schadstellen bestehen zum Großteil aus Pixeln dieser Klasse, Farbpixel dieser Klasse sind immer Teil eines Befallstellenzentrums.

Die Schadklasse Sk_II enthält Farben, die sich stark vom gesunden Grün unterscheiden und mit hoher Wahrscheinlichkeit Teil oder Zentrum einer Befallstelle sind. Schadklasse Sk_III beinhaltet Farben, die potentiell zu Schadstellen gehören, jedoch nie selbst Zentrum einer Schadstelle sind.

Ein Problem bei der Analyse von Befallstellen ist, dass die Zentren von Befallstellen oft überbelichtet sind. Dies hat zur Folge, dass nicht nur der Rotanteil die Grenze des Wertebereiches von 255 (bei einer Auflösung von 8 Bit Tiefe) überschreitet, sondern auch der Grünanteil. Damit kommt die auf den Wertebereich projizierte Farbe maximal auf der Unbuntachse mit R=G=255 zu liegen, obwohl die tatsächliche und mit dem Auge wahr-nehmbare Färbung der einer gewöhnlichen Schadestelle, also Braun oder Gelb entspricht. In diesem Farbort mit R=G=255 trifft man auch auf überbelichtete Stellen, die von sehr dünnen Blattabschnitten herrühren. Deren Farbtripel werden, vom Überlauf des Wertebereichs auf der grünen Seite der Unbuntachse aus, ebenso dorthin projiziert.

Um nun Projektionen auf die Wertebereichsgrenze, die stets eine Verzerrung ihrer Klassifizierungswinkel mit sich bringen, dennoch ohne größere Fehler klassifizieren zu können, schlägt die Erfindung folgende Vorgehensweise vor:

Alle Pixel mit R<255 und G=255 werden den gesunden Grünarealen zugeschlagen. Für die Färbewerte mit R=255 und G<255 wird Sk_I so dimensioniert, dass sie in ihr zu liegen kommen. Gefundene Flächen von R=G=255-Überbelichtungen werden in einem eigenen Schritt, nämlich durch Untersuchung ihrer Umgebungspixel, entweder der Schadklasse Sk_I oder den Bereichen außerhalb des Blattes (Hintergrund) zugeschlagen.

Bei der Bonitierung von Pflanzenblättern wie der hier beschriebenen beispielhaften Bonitierung eines Tabakblattes können im Automatisierten Verfahren zwei Typen von Schadstellen ermittelt werden, nämlich starke und schwache. Die Zentren starker Befallstellen entstammen stets der Schadklasse Sk_I. Sie liegen oft in Clustern und enthalten zudem Umgebungspixel aus den Schadklassen Sk_II und Sk_III.

Schwache Befallstellen sind in den Aufnahmen oft daran zu erkennen, dass sie nicht den typischen kreisförmigen Aufbau mit hellem Zentrum besitzen.

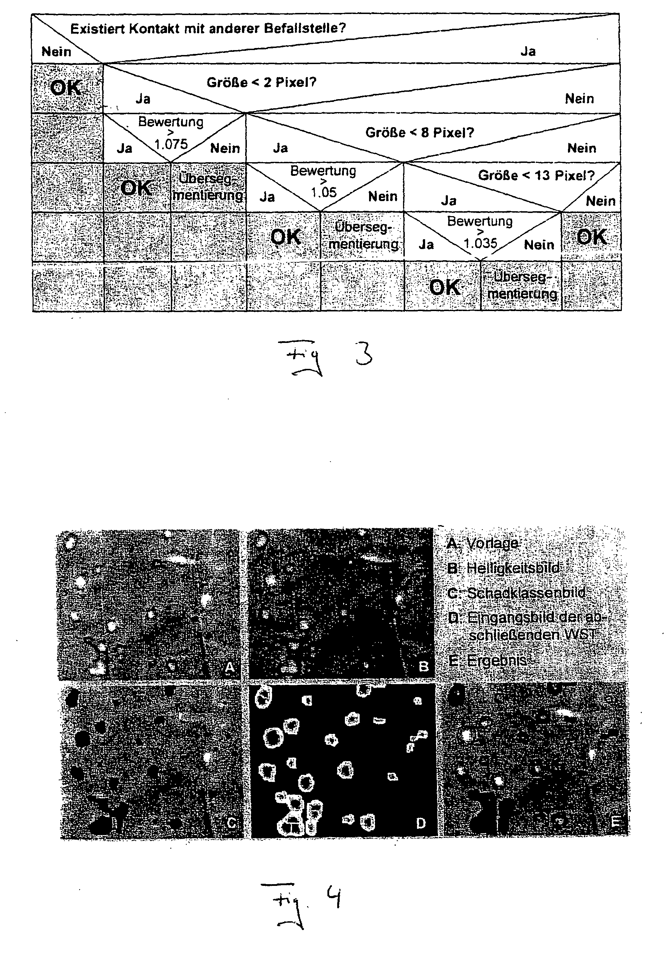

Die Erfindung schlägt nun vor, über die Einteilung der Schadklassen Masken des Bildes zu erzeugen, die jeweils die Zugehörigkeit der entsprechenden Pixel zu ihrer Schadklasse dokumentieren. Aus den in einer Maske erkannten zusammenhängenden Bereichen können dann durch geeignete Berechnungen die Zentren und Ausdehnungen der Schadstellen gewonnen werden. Als besonders zweckmäßig hat sich dabei die sogenannte Wasserscheidentransformation erfolgt, auf die nachstehend im Zusammenhang mit der Fig. 2 eingegangen wird.

Bei der Analyse in Clustern liegender, starker Befallstellen führt der menschliche Experte in der Bonitierung die Schadstellenbestimmung durch, indem er in den stark geschädigten und verfärbten Gebieten, die mit Sk_I gefunden wurden, nach relativen Helligkeitszentren sucht. Jedes dieser Helligkeitszentren kennzeichnet den Kern einer einzelnen Befallstelle, die in den Cluster eingebunden ist. Die Umgebungspixel jedes Kerns werden als seine Einflusszone betrachtet. Die Einflusszone definiert sich durch die vom Kern aus stets abfallende Helligkeit und endet entweder an den Grenzen des Schadbereichs oder an den Helligkeitsminima, die sich bei der Annäherung an anderen Befallstellen ergeben.

Im automatisierten Verfahren werden die zusammenhängenden Gebiete der Schadstellenklasse Sk_I, also potentielle Cluster von starken Befallstellen, durch Auffinden der lokalen Helligkeitszentren und ihrer Einflusszonen in die enthaltenen Schadstellen segmentiert. Dabei wird die an sich bekannte Wasserscheidentransformation auf ein geeignetes Helligkeitsbild angewandt, das sich mit einer aufgabenangepassten Helligkeitsdefinition errechnen lässt.

Während der Helligkeitseindruck, den ein menschlicher Beobachter aus den einzelnen Farbwerten R, G und B gewinnt, durch eine gewichtete Summierung gemäß der empirischen Formel Helligkeit = 0,299xR + 0,587xG + 0,114xB berechnen lässt, ist es bei der Definition der Helligkeit für die Lösung der der Erfindung zugrunde liegenden Aufgabe sinnvoll, in Anbetracht der Wichtigkeit des Blaukanals in den potentiell überbelichteten Zentren alle drei Kanäle (R,G,B) gleich zu gewichten. Man kann dann zur Bestimmung der Helligkeit die skalierte geometrische Vektorlänge |RGB| jedes Pixels verwenden.

Die z.B. im Internet unter der Adresse http://cmm.ensmp.fr beschriebene, seit langem bekannte Wasserscheidentransformation ermittelt in einem Graustufenbild, das als Höhenkodierung einer geographischen Oberfläche verstanden wird, alle Senken mit ihren Einflussgebieten. Diese werden an ihren Grenzen durch sogenannte Wasserscheiden voneinander getrennt.

Um damit die Helligkeitszentren in den Arealen der Schadklasse Sk_I finden zu können, müssen die Areale der Schadklasse I statt "als helle Berge" als "dunkle Senken" eigener Grundwasserseen in das Wasserscheiden-Eingangsbild eingetragen werden. Dazu wird die inverse skalierte Form der Helligkeit benutzt. Zusätzlich werden um die maskierten Elemente von Sk_I sehr hohe Ränder maximalen Grauwerts als Zwangswasserscheiden gezogen. Damit wird eine Ausdehnung der Seen und Einzugsgebiete in Bereiche außerhalb der interessierenden Maske verhindert.

Um den Rechenaufwand der Wasserscheidentransformation durch unnötige Reliefstrukturen zu vermeiden, werden alle nicht als Sk_I maskierten Bereiche als tiefe Ebenen niedrigsten Grauwertes eingetragen.

Ein für den menschlichen Eindruck in den Grauwerten kontrastoptimiertes Eingangsbild nach diesem Verfahren zeigt die Fig. 2, wobei das Bild A die Maske der Schadklasse Sk_I ist, das Bild B das Helligkeitsbild und das Bild C das invertierte und wie vorstehend beschrieben behandelte Eingangsbild zur Wasserscheidentransformation darstellt.

Mit dieser ersten Wasserscheidentransformation können die Cluster der Schadklasse Sk_I in ihre beteiligten Befallzentren aufgetrennt werden. Allerdings ist es in der Bildverarbeitung seit langem bekannt, dass die Wasserscheidentransformation oft übersegmentiert, also zusätzliche kleine unerwünschte Abtrennungen von Randgebieten erzeugt.

Erfindungsgemäß werden solche Übersegmentierungen, die sich stets im Randbereich stärkerer Befallstellen befinden und praktisch nie eigenständig auftreten wie folgt behandelt (vgl. Fig. 3): jede durch die Wasserscheidentransformation entstandene Fläche wird durch drei Parameter daraufhin überprüft, ob sie für den menschlichen Experten als Übersegmentierung erscheint und, wenn ja, aufgelöst. Die einfließenden Parameter sind dabei die Größe des Elementes, eine spezielle Bewertung im Sinne der maximalen "Braunheit" seiner Pixel und die Umgebungseigenschaft, ob angrenzende Nachbarschadstellen existieren oder nicht.

Die Größe definiert sich in Pixeln, da Übersegmentierungen bei der gewöhnlichen Wasserscheidentransformation meist im Bereich weniger Pixel auftreten. Ist gemäß dem in Fig. 3 gezeigten Entscheidungsablauf zur Auffindung von Übersegmentierungen eine entstandene Fläche als Übersegmentierung erkannt worden, so wird erfindungsgemäß die Schadfläche dieser Übersegmentierung unter den benachbarten Befallstellen aufgeteilt. Dazu werden die Pixel aus der Maske von Sk_I ausgetragen und in die Maske von Sk_II eingetragen.

Während die Zentren starker Schadstellen aus Pixeln der Schadklasse Sk_I zusammengesetzt sind, bestehen schwache Schadstellen zentral aus weniger geschädigten Elementen der Schadklasse Sk_II. Da schwache Schadstellen definitionsgemäß nicht in der Nachbarschaft anderer Befallstellen liegen, lassen sie sich in der Maske von Sk_II relativ einfach entnehmen: alle in Sk_II zusammenhängenden Gebiete, die keinen Kontakt zu den (in der ersten Wasserscheidentransformation bereinigten) Elementen der Maske von Sk_I haben, sind Zentren schwacher Befallstellen. Der Rest der Maske wird der Schadklassenmaske von Sk_III übergeben, d.h. aus Sk_II ausgetragen und in Sk_III eingetragen. Zusätzlich findet eine Größenfilterung durch einen als Mindestkerngröße bezeichnenbaren Parameter statt: alle aufgefundenen, schwachen Zentren, deren Größe diese Mindestkerngröße unterschreitet, werden aufgelöst, indem ihre Pixel aus der Maske Sk_II ausgetragen und in Sk_III eingetragen werden.

Erfindungsgemäß erhält man so schließlich drei Masken:
eine bereinigte Maske Sk_I, in der alle Zentren starker Befallstellen gespeichert werden,
eine Maske von Sk_II, die nur noch die Zentren schwacher Befallstellen enthält und
eine Maske Sk_III, die alle sonstigen Pixel enthält, die entsprechend der eingestellten Parameter schadhaft sind. Sind diese Pixel in der Nachbarschaft obiger Zentren, so werden sie deren Gebieten zugerechnet.

Aus den Zentren und ihren Umgebungen werden nun in einer abschließenden Wasserscheidentransformation die feststellbaren Grenzen der gesuchten Befallstellen ermittelt (vgl. Fig. 4).

Es hat sich gezeigt, dass die gefundenen Befallzentren, sowohl die starken wie die schwachen, die Befallstellen grundsätzlich zu eng eingrenzen. Die tatsächlichen Grenzen einer Befallstelle liegen weiter außerhalb und müssen aus den erstellten Masken geeignet aufgefunden werden. Dazu werden mit dem an sich bekannten morphologischen Bereichswachstum maximal breite Ränder um die Befallstellen gezogen. Diese werden danach, durch Maskierung mit Sk_III, auf ihre schadhaften Pixel reduziert.

Damit ist die prinzipielle Fläche aller Befallstellen definiert. Ihre Verteilung auf die Zentren kann, wegen des dunklen, unstrukturierten Charakters der Randzonen, nur auf Basis der minimalen Entfernung vollzogen werden. Durch eine zweite Wasserscheidentransformation werden die topographisch ebenen Terrassen entsprechend dem Nearest-Neighbour-Verfahren auf die angrenzenden Senken verteilt.

Außer dem in Fig. 4 gezeigten Ergebnisbild sind für den Benutzer des erfindungsgemäßen Verfahrens weitere statische oder grafische Darstellungen und Auswertungen des automatischen Bonitierungsverfahrens wünschenswert. Fig. 6 zeigt eine mögliche Tabelle, in der die Ergebnisse der automatischen Bonitierung festgehalten werden. Eine solche Tabelle kann natürlich problemlos weiterverarbeitet, insbesondere für Reihenuntersuchungen verwandt werden. Insbesondere in der Ökotoxikologie interessiert der Flächenprozentsatz der Befallstellen und die Anzahl der Befallstellen relativ zu ihrer Größe. Ein solches Ergebnis kann wie in Fig. 7 gezeigt leicht grafisch ausgegeben werden.

Nicht-erfindungsgemäß kann das angegebene Verfahren auch zur Quantifizierung von Flächenbedeckungsgraden eingesetzt werden, wobei es sich dann empfiehlt, neben dem "Grünberg" weitere Klassen zu definieren, damit z.B. Steine besser von totem Pflanzenmaterial unterschieden werden kann.

Durch die selektive Intensivierung des Grünwertes oberhalb einer Auslöseschwelle ist es möglich, Grünwerte von Braunwerten gleicher Intensität zu unterscheiden, also Grüntöne von Brauntönen vor verschiedenen braunen Hintergründen zu trennen, wie es z.B. bei der Bonitierung von Aufnahmen mit Pflanzen bewachsener Gewässer notwendig ist. Die mit zwei Parametern festgelegte Intensivierung wird automatisch mit Hilfe einer Kalibrationskurve aus dem Farbverhältnis gesunder Blätter gegenüber deren Farbhintergrund festgelegt.

Entscheidend für die Auswertung ist, dass es sich nicht um eine reine Zusammenfassung von Farben zu Farbklassen als gesuchten Objekten handelt, sondern um eine komplexe technische Erkennung von biologischen Objekten, basierend auf einer differenzierten Auswertung von Farben, Formen und auch Farb- und Formkontexten. Da aus der Bildverarbeitung viele unterschiedliche Segmentierungsverfahren bereits bekannt sind, liegt der erfindungswesentliche Schritt in der Reduktion des Merkmalsraumes auf zwei Dimensionen und der Bildung geeigneter Äquivalenzklassen durch die-Einführung des Grünbergs.

Ist ein Referenzpunkt mit bekannter Chlorophyllkonzentrationsäquivalenz gegeben, kann die Chlorophyllmenge pro Flächeneinheit vermessen werden (Endpunktkalibration). Die Konzentration verringert sich logarithmisch mit der Entfernung vom Maximum entlang der Farbkurve. Dies gilt natürlich auch für andere Töne je nach Aufgabenstellung. Es lässt sich also mit dem erfindungsgemäßen Verfahren die Flächenkonzentration eines beliebigen sie verursachenden Farbstoffes ermitteln.

Insbesondere ermöglicht die Erfindung die zerstörungsfreie Bestimmung z.B. des Chlorophyllgehaltes und hilft damit, die statistischen Auswertungen in Anwendung, Normierung und Forschung der Ökotoxikologie zu vereinfachen und zu objektivieren und die Basis weiterer empirischer Parameterbestimmungen zu schaffen.

Es sei an dieser Stelle betont, dass die Erfindung auch die Ermöglichung der effizienten automatischen Bonitierung auch großer Anzahlen von Objekten, insbesondere großen Anzahlen von eingelieferten Abbildungen der Objekte, impliziert.

## Patentansprüche

1. Verfahren zur automatischen Bonitierung von Grünpflanzen anhand einer aus einer Anzahl von Pixeln bestehenden digitalen Aufnahme des Objektes durch Einteilung der Pixel in vordefinierbare Klassen, wobei
- nach einem vorgebbaren ersten Auswahlkriterium ein zweidimensionaler Farbraum bestimmt wird,
- die Pixel der Aufnahme auf diesen zweidimensionalen Farbraum projiziert werden,
- in dem zweidimensionalen Farbraum nach einem vorgebbaren zweiten Auswahlkriterium wenigstens ein Bezugsgebiet definiert wird,
- eine den zweidimensionalen Farbraum in einer doppelt logarithmischen Darstellung teilende Tangente an das wenigstens eine Bezugsgebiet gelegt wird,
- die Einteilung der Pixel in vordefinierbare Klassen anhand einer Bestimmung der Lage der Pixel in dem zweidimensionalen Farbraum relativ zu der Tangente oder weiteren geometrischen Konstrukten erfolgt,
- die klassifizierten Pixel im Ortsraum in unterschiedliche Masken gespeichert werden,
- der zweidimensionale Farbraum durch drei Geraden in vier unterschiedliche Schadklassen eingeteilt ist (gesund, SK_I, SK_II, SK_III) und in einer ersten mittels eines Verfahrens zur Beseitigung von Übersegmentierungen bereinigten Maske alle Zentren starker Befallstellen gespeichert sind,
- in einer zweiten Maske die Zentren schwacher Befallstellen gespeichert sind und in einer dritten Maske alle sonstigen Pixel, die entsprechend der gewählten Parameter als schadhaft eingestuft sind.

2. Verfahren nach Anspruch 1, insbesondere zur Bonitierung von Pflanzen, ***dadurch gekennzeichnet, dass*** der zweidimensionale Farbraum die Rot-Grün-Anteile bei der Zerlegung der in der Aufnahme enthaltenen Farben gemäß der aditiven Farbmischung mit den Grundfarben Rot, Grün und Blau enthaltende Farbraum ist.

3. Verfahren nach Anspruch 1 oder 2, ***dadurch gekennzeichnet, dass*** das zweite Auswahlkriterium eine Nachbarschaftsbeziehung zwischen solchen Elementen des zweidimensionalen Farbraums ist, die ein Gebiet einschließen, in dem sich ein bestimmter Prozentsatz zu einer vordefinierten Klasse gehörender Pixel eines Referenzobjektes befindet.

4. Verfahren nach einem der Ansprüche 1 bis 3, ***dadurch gekennzeichnet, dass*** zur Definition weiterer Klassen und/oder zur Berücksichtigung bestimmter Parameter der Bildaufnahme und/oder des aufgenommenen Objektes, insbesondere zur Berücksichtigung von Farbabweichungen auf Grund des Alters des Objektes das wenigstens eine Bezugsgebiet in dem zweidimensionalen Farbraum verschoben werden kann.

5. Verfahren nach einem der Ansprüche 1 bis 4, ***dadurch gekennzeichnet, dass*** die verschiedenen Klassen zugeordneten Pixel in einem weiteren Schritt getrennt daraufhin untersucht werden, ob sie im Ortsraum zueinander benachbart liegen.

6. Verfahren nach einem der Ansprüche 1 bis 4, ***dadurch gekennzeichnet, dass*** auf die einer bestimmten Klasse zugeordneten Pixel eine Wasserscheidentransformation angewandt wird.

7. Verfahren nach Anspruch 6, ***dadurch gekennzeichnet, dass*** die Anzahl der mittels der Wasserscheidentransformation ermittelten Senken und die Größe ihrer Einflussgebiete im Ortsraum ermittelt und ausgegeben wird.

8. Verfahren nach Anspruch 7, ***dadurch gekennzeichnet, dass*** die Anzahl der Senken und die Größe der Einflussgebiete automatisch in Relation zu weiteren aus dem Farbbild des Objektes entnehmbaren Daten, zur Gesamtgröße des Objektes gesetzt und die sich so ergebenden Daten in einer Tabelle ausgegeben werden.

## Claims

1. A method of automatically evaluating foliage plants using a digital image of the object, said image consisting of a number of pixels, by classifying the pixels in predefinable classes,
wherein
- a two-dimensional color space is determined according to a first selection criterion that may be given,
- the pixels of the image are projected onto this two-dimensional color space,
- at least one reference area is defined in said two-dimensional color space according to a second selection criterion that may be given,
- a tangent is drawn to the at least one reference area, said tangent dividing the two-dimensional color space into a double-logarithmic representation,
- the classification of the pixels into predefinable classes occurs by determining the position of the pixels in the two-dimensional color space relative to the tangent or to other geometric constructs,
- the classified pixels are stored in different masks in the position space,
- the two-dimensional color space is divided by three straight lines into four different damage classes (healthy, SK 1, SK II, SK III) and all the centers of heavily damaged sites are stored in a first mask cleared by means of a method for eliminating oversegmentations,
- the centers of slightly damaged sites are stored in a second mask and all the other pixels that are graded as damaged according to the parameters chosen are stored in a third mask.

2. The method as set forth in claim 1, more specifically for valuating plants, ***characterized in that*** the two-dimensional color space is the color space containing the red-green moieties obtained during decomposition of the colors contained in the image according to the additive color mixture of the primitive colors red, green and blue.

3. The method as set forth in claim 1 or 2, ***characterized in that*** the second selection criterion is a neighborhood relationship between such elements of the two-dimensional color space which enclose a region containing a certain percentage of pixels of a reference object belonging to a predefined class.

4. The method as set forth in any one of the claims 1 through 3, ***characterized in that**,* for defining further classes and/or for taking into account certain parameters of the image and/or of the object taken, more specifically for taking into account color differences due to the age of the object, the at least one reference area can be displaced within the two-dimensional color space.

5. The method as set forth in any one of the claims 1 through 4, ***characterized in that*** the pixels associated with the different classes are next analyzed separately in another step to see whether they are neighboring each other in the position space.

6. The method as set forth in any one of the claims 1 through 4, ***characterized in that*** a watershed transformation is used on the pixels associated with a certain class.

7. The method as set forth in claim 6, ***characterized in that*** the number of the depressions determined by means of the watershed transformation and the size of their areas of influence in the position space are determined and outputted.

8. The method as set forth in claim 7, ***characterized in that*** the number of depressions and the size of the areas of influence are automatically put into relation with other data appearing from the color image of the object and concerning the overall size of the object and that the thus obtained data are outputted in a chart.

## Revendications

1. Procédé d'évaluation automatique de plantes vertes à partir d'une image digitale de l'objet, cette image consistant en un nombre de pixels, par répartition des pixels dans des classes aptes à être définies à l'avance,
où
- un espace couleur bidimensionnel est déterminé selon un premier critère de sélection apte à être donné,
- les pixels de l'image sont projetés sur cet espace couleur bidimensionnel,
- au moins une région de référence est définie dans l'espace couleur bidimensionnel selon un deuxième critère de sélection apte à être donné,
- une tangente à l'au moins une région de référence divisant l'espace couleur bidimensionnel en une représentation bilogarithmique est tracée,
- les pixels sont répartis dans des classes aptes à être prédéfinies en déterminant la position des pixels dans l'espace couleur bidimensionnel par rapport à la tangente ou à d'autres configurations géométriques,
- les pixels classifiés sont mémorisés dans différents masques dans l'espace lieu,
- l'espace couleur bidimensionnel est divisé par trois lignes droites en quatre classes de détérioration différentes (saine, SKI, SK_II, SK_III) et tous les centres d'endroits fortement atteints sont mémorisés dans un premier masque nettoyé moyennant un procédé d'élimination de sur-segmentations,
- les centres d'endroits faiblement atteints sont mémorisés dans un deuxième masque et tous les autres pixels qui sont classés endommagés en fonction de paramètres choisis, dans un troisième masque.

2. Procédé selon la revendication 1, notamment pour l'évaluation de plantes, ***caractérisé en ce que*** l'espace couleur bidimensionnel est l'espace couleur contenant les composantes rouge-vert lors de la décomposition des couleurs contenues dans l'image en fonction du mélange additif de couleurs avec les couleurs primitives rouge, vert et bleu.

3. Procédé selon la revendication 1 ou 2, ***caractérisé en ce que*** le deuxième critère de sélection est une relation de voisinage entre des éléments de l'espace couleur bidimensionnel qui incluent une région dans laquelle se trouve un certain pourcentage de pixels d'un objet de référence appartenant à une classe prédéfinie.

4. Procédé selon l'une quelconque des revendications 1 à 3, ***caractérisé en ce que**,* pour définir d'autres classes et/ou pour tenir compte de certains paramètres de la prise d'image et/ou de l'objet pris, notamment pour tenir compte de différences de couleurs en raison de l'âge de l'objet, on peut déplacer l'au moins une région de référence dans l'espace couleur bidimensionnel.

5. Procédé selon l'une quelconque des revendications 1 à 4, ***caractérisé en ce que*** les pixels associés à différentes classes sont ensuite examinés séparément dans une étape suivante pour voir s'ils sont voisins dans l'espace lieu.

6. Procédé selon l'une quelconque des revendications 1 à 4, ***caractérisé en ce que*** l'on applique aux pixels associés à une certaine classe une transformation de la ligne de partage des eaux.

7. Procédé selon la revendication 6, ***caractérisé en ce que*** le nombre de puits obtenus moyennant la transformation de la ligne de partage des eaux et la taille de leurs régions d'influence dans l'espace lieu sont repérés et éditées.

8. Procédé selon la revendication 7, ***caractérisé en ce que*** le nombre de puits et la taille des régions d'influence sont automatiquement mis en relation avec d'autres données concernant la taille totale de l'objet apparaissant dans l'image en couleur de l'objet et que les données ainsi obtenues sont présentées dans un tableau.
